# EUROPEAN PATENT APPLICATION

(11) **EP 4 726 845 A1**
(43) Date of publication of application: **15.04.2026**
(21) Application number: 25204314.6
(22) Date of filing: 24.09.2025
(51) Int. Cl.: H01M 10/0587, H01M 10/613, H01M 10/6551, H01M 50/103, H01M 50/474, H01M 50/477, H01M 50/48, H01M 50/586, H01M 50/595, H01M 10/04

(54) **PRISMATIC CELL**

(30) Priority: 10.10.2024 CN 202422442586 U
(71) Applicant: AESC Japan Ltd., Yokohama-shi, Kanagawa 220-0012 (JP)
(72) Inventor: WANG, Yunhui, Jiangyin City, Wuxi City, 214443 (CN); WANG, Jin, Jiangyin City, Wuxi City, 214443 (CN)
(74) Representative: Becker, Eberhard

(57) **Abstract**

A prismatic cell (100) including a shell (10) and two jelly roll assemblies (20) accommodated therein is provided. Each jelly roll assembly (20) includes at least two jelly rolls (30) and a first insulating tape (40), wherein one jelly roll (30) is designated as a first jelly roll (31), and another jelly roll (30) is designated as a second jelly roll (32). An outer peripheral surface of each jelly roll (30) includes two plane regions (304) and a first corner region (305a) and a second corner region (305b) respectively connected to the opposite ends of the two plane regions (304). The first insulating tape (40) covers the first corner region (305a) of the second jelly roll (32). One end of the first insulating tape (40) extends to the first plane region (304a) via the first corner region (305a) of the first jelly roll (31).

## Description

### BACKGROUND

### Technical Field

The disclosure relates to a field of lithium battery technology, and in particular to a prismatic cell.

### Related Art

A jelly roll within the prismatic cell is formed by stacking and winding positive and negative electrode sheets and a separator. An outer peripheral surface of the jelly roll along a winding direction includes a corner region and a plane region. Since the outer peripheral surface of the jelly roll has curvature in the corner region and may not be subjected to hot pressing treatment, the contact between the positive and negative electrode sheets and the separator in the corner region is loose with large gaps, which results in a lithium plating phenomenon easily generated on a surface of the negative electrode sheet located in the corner region during long-term cycling of the battery and affects battery performance. Moreover, in current common mass production products, limited by process and other reasons, the prismatic cell with a certain thickness is often designed by stacking multiple jelly rolls. A number of corner regions inside the battery increases, and a bending angle of the positive and negative electrode sheets and the separator in the corner region becomes larger, which causes an impact of abnormal lithium plating on the battery performance to become increasingly serious.

### SUMMARY

The technical problem to be solved by the disclosure is to overcome the defect that the jelly roll of the prismatic cell in the related art is prone to abnormal lithium plating, affecting battery performance, and to provide a prismatic cell.

This disclosure solves the aforementioned technical problems through the following technical implementations.

A prismatic cell includes a shell and two jelly roll assemblies accommodated in the shell. Each of the jelly roll assemblies includes at least two jelly rolls stacked along a first direction. An outer peripheral surface of each of the jelly rolls along a winding direction includes two plane regions and a first corner region and a second corner region respectively connected to opposite ends of the two plane regions. The two plane regions are both perpendicular to the first direction. The jelly roll adjacent to the shell along the first direction in the jelly roll assembly is designated as a first jelly roll. The two plane regions of the first jelly roll include a first plane region adjacent to the shell. The jelly roll adjacent to another jelly roll assembly in the jelly roll assembly is designated as a second jelly roll.

Each of the jelly roll assemblies further includes a first insulating tape. The first insulating tape covers at least a portion of the first corner region of the second jelly roll, and one end of the first insulating tape extends to the first plane region via the first corner region of the first jelly roll.

The prismatic cell, by forming jelly roll assemblies with two or more jelly rolls, and accommodating two jelly roll assemblies in the shell, facilitates the overall processing and manufacturing of the prismatic cell. The jelly roll assembly disposes a first insulating tape to cover the first corner region of each jelly roll in the jelly roll assembly, so that the first insulating tape generates a tightening effect on the corner region of each jelly roll, which makes the electrode sheets and the separator in the first corner region of the jelly roll fit tightly, and improves the lithium plating phenomenon.

Additionally, the first insulating tape extends to the surface of the first plane region of the first jelly roll adjacent to the shell along the first direction to increase a coverage area of the first insulating tape on the surface of the jelly roll assembly, and enable to clamp and fix the portion of the first insulating tape disposed on the first plane region by the first jelly roll and the shell, which brings a better fixing effect. Meanwhile, by extending the first insulating tape to the surface of the first plane region of the first jelly roll adjacent to the shell along the first direction, the first jelly roll is separated from the shell by the first insulating tape, which improves an insulation protection effect of the jelly roll assembly.

Preferably, one end of the first insulating tape extends to the second corner region of the first jelly roll via the first corner region of the first jelly roll.

Extending one end of the first insulating tape to the second corner region via the first corner region of the first jelly roll may increase the coverage area of the first insulating tape on the surface of the first jelly roll, and enable the first insulating tape to directly generate the tightening effect on the second corner region of the first jelly roll to better tighten the electrode sheets and the separator of each jelly roll in the jelly roll assembly.

Preferably, the jelly roll assembly includes at least three jelly rolls stacked along the first direction. The jelly roll disposed between the first jelly roll and the second jelly roll in the jelly roll assembly is designated as a third jelly roll. One end of the first insulating tape further extends to the second corner region of one of the third jelly rolls via the second corner region of the first jelly roll.

Extending another end of the first insulating tape to the second corner region of one of the third jelly rolls via the second corner region of the first jelly roll may increase the coverage area of the first insulating tape on the surface of each jelly roll in the jelly roll assembly. By extending another end of the first insulating tape and covering more second corner regions of the jelly rolls, the first insulating tape may also directly generate the tightening effect on the covered second corner regions to better tighten the electrode sheets and the separator of each jelly roll in the jelly roll assembly.

Preferably, one end of the first insulating tape further extends to the second corner region of the second jelly roll via the second corner region of the first jelly roll.

Extending another end of the first insulating tape to the second corner region of the second jelly roll via the second corner region of the first jelly roll enables the first insulating tape to cover the second corner region of each jelly roll in the jelly roll assembly, so as to directly generate the tightening effect on the second corner region of each jelly roll, enable the electrode sheets and the separator in both corner regions of the jelly roll to fit tightly, and improve the lithium precipitation phenomenon.

Preferably, another end of the first insulating tape is disposed at the junction between the first corner region of the second jelly roll and the plane region of the second jelly roll.

By disposing another end of the first insulating tape at the junction between the first corner region of the second jelly roll and a plane region of the second jelly roll, the coverage area of the first insulating tape on the corner region of the jelly roll may be increased.

An end of the first insulating tape is disposed at the junction between the first corner region and the plane region of the second jelly roll without extending to the surface of the plane region, which may avoid the first insulating tape being disposed on the plane region of the jelly roll and increasing the overall thickness of the jelly roll, so that the prismatic cell may accommodate more jelly rolls along the first direction, with relatively higher energy density.

Preferably, the prismatic cell further includes a heat dissipation medium. The heat dissipation medium is disposed between two of the jelly roll assemblies.

By disposing the heat dissipation medium with a heat conduction capability between two adjacent jelly roll assemblies, the heat conduction capability between the jelly roll assemblies may be improved, thereby enhancing the overall heat dissipation capability of the prismatic cell.

Preferably, the two plane regions of the second jelly roll include a second plane region adjacent to another jelly roll assembly. The heat dissipation medium is disposed between the second plane regions of the two jelly roll assemblies, and is connected to the end of the first insulating tape.

By disposing the heat dissipation medium with the heat conduction capability between the second plane regions in the two jelly roll assemblies, the heat conduction capability between the jelly roll assemblies may be improved,

By connecting the heat dissipation medium to the end of the first insulating tape, a connection relationship between the first insulating tape and each jelly roll may be strengthened, which improves the tightening capability on each corner region of the jelly roll.

Meanwhile, the heat dissipation medium is connected to the first insulating tape. A heat conduction path between the heat dissipation medium and the first insulating tape is continuous, making the heat of the heat dissipation medium be transmitted outward via the first insulating tape, with a better heat dissipation capability.

Preferably, the jelly roll is formed by winding a positive electrode sheet, a negative electrode sheet, and a separator. The separator is sandwiched between the positive electrode sheet and the negative electrode sheet. A tail end of the separator extends beyond the tail ends of the positive electrode sheet and the negative electrode sheet.

The prismatic cell further includes an ending tape. The ending tape is adhered to the tail end of the separator and fixes the tail end of the separator to the outer peripheral surface of the jelly roll. The ending tape and the heat dissipation medium are offset on the outer peripheral surface of the jelly roll.

Preferably, the prismatic cell further includes a second insulating tape. The second insulating tape covers at least a portion of the first corner region of the second jelly roll in the two jelly roll assemblies.

Alternatively, the second insulating tape covers at least a portion of the second corner region of the second jelly roll in the two jelly roll assemblies.

The prismatic cell achieves a position fixed between the two jelly roll assemblies by providing the second insulating tape to at least cover the corner portions (the first corner region or the second corner region) of the second jelly roll in the two jelly roll assemblies, which avoids displacement between the jelly roll assemblies during processing and manufacturing, so as to facilitate accommodation of the jelly rolls within the shell, and also facilitate implementation of a subsequent manufacturing process (for example, connecting the electrode tabs in the two jelly roll assemblies).

Preferably, the prismatic cell further includes a second insulating tape. At least one end of the second insulating tape extends to the second corner region of the first jelly roll in at least one of the jelly roll assemblies.

The second insulating tape extends to the second corner region of the first jelly roll in the jelly roll assembly to tighten the portion of the first jelly roll in the jelly roll assembly that is not covered by the first insulating tape through the second insulating tape, so that the electrode sheets and the separator fit more closely at the corner region on that side.

Preferably, the prismatic cell further includes a second insulating tape. At least one end of the second insulating tape extends to the surface of the first insulating tape in at least one of the jelly roll assemblies.

The second insulating tape covers the surface of the first insulating tape in the jelly roll assembly to structurally strengthen the first insulating tape, which improves the tightening effect of the first insulating tape on the corner region of the covered jelly roll.

For the implementation where one end of the second insulating tape covers the surface of the first insulating tape of one jelly roll assembly, while the other end extends to the corner region of the first jelly roll of another jelly roll assembly, different core implementations of the jelly rolls may be adopted to avoid interference with the already adhered first insulating tape.

Preferably, the jelly roll is formed by winding a positive electrode sheet, a negative electrode sheet, and a separator. The separator is sandwiched between the positive electrode sheet and the negative electrode sheet. Along a width direction of the separator, a width D₁ of the first insulating tape has a value range of 60% to 90% of a width D of the separator.

By making the first insulating tape adhere and cover the surface of the corner region of the jelly roll over a large area, an acting area between the first insulating tape and the corner region of the jelly roll is increased, so that the first insulating tape better tightens the electrode sheets and the separator of the jelly roll.

Preferably, the first insulating tape includes at least two first sub-insulating tapes. Each of the first sub-insulating tapes covers at least a portion of the first corner region of the second jelly roll. One end of each of the first sub-insulating tapes extends to the first plane region via the first corner region of the first jelly roll. Each of the first sub-insulating tapes is arranged at intervals along the width direction of the separator of the jelly roll.

By disposing multiple first sub-insulating tapes to jointly form the first insulating tape, the difficulty of the process of disposing the first insulating tape on each jelly roll in the jelly roll assembly is reduced while ensuring the coverage area of the first insulating tape on the outer peripheral surface of the jelly roll.

The positive progressive effects of the disclosure lie in as follows.

The prismatic cell forms a jelly roll assembly with two or more jelly rolls, and then accommodates two jelly roll assemblies in the shell to facilitate the overall processing and manufacturing of the prismatic cell.

By disposing the first insulating tape to cover the first corner region of each jelly roll in the jelly roll assembly, the tightening effect is generated on the corner region of each jelly roll, making the electrode sheets and the separator at the first corner region of the jelly roll fit tightly, which improves the lithium precipitation phenomenon.

By extending the first insulating tape to the surface of the first plane region of the first jelly roll adjacent to the shell along the first direction, the coverage area of the first insulating tape on the surface of the jelly roll assembly is increased, and the portion of the first insulating tape disposed at the first plane region may be clamped and fixed by using the first jelly roll and the shell, which brings better fixing effect.

### BRIEF DESCRIPTION OF THE DRAWINGS

FIG. 1 is a schematic structural view of a prismatic cell of Embodiment 1 of the disclosure.
FIG. 2 is a schematic structural view of a jelly roll of Embodiment 1 of the disclosure.
FIG. 3 is a distribution view of a surface region of the jelly roll of Embodiment 1 of the disclosure.
FIG. 4 is a schematic three-dimensional view of the jelly roll of Embodiment 1 of the disclosure.
FIG. 5 is a schematic plan view of a specific implementation of a first insulating tape of Embodiment 1 of the disclosure.
FIG. 6 is a schematic three-dimensional view of a jelly roll assembly in FIG. 5.
FIG. 7 is a schematic plan view of another specific implementation of the first insulating tape of Embodiment 1 of the disclosure.
FIG. 8 is a schematic three-dimensional view of a jelly roll assembly in FIG. 7.
FIG. 9 is a schematic view of a setting position of the first insulating tape on a surface of the jelly roll of Embodiment 1 of the disclosure.
FIG. 10 is a schematic view of a setting position of a first sub-insulating tape on the surface of the jelly roll of Embodiment 1 of the disclosure.
FIG. 11 is a schematic view (1) of a processing state of a jelly roll assembly of Embodiment 1 of the disclosure.
FIG. 12 is a schematic view (2) of a processing state of the jelly roll assembly of Embodiment 1 of the disclosure.
FIG. 13 is a schematic view (3) of a processing state of the jelly roll assembly of Embodiment 1 of the disclosure.
FIG. 14 is a schematic structural view of a jelly roll assembly of a prismatic cell of Embodiment 2 of the disclosure.
FIG. 15 is a schematic structural view of a jelly roll assembly of a prismatic cell of Embodiment 3 of the disclosure.
FIG. 16 is a schematic structural view of a jelly roll assembly of a prismatic cell of Embodiment 4 of the disclosure.
FIG. 17 is a schematic structural view (1) of a jelly roll assembly of a prismatic cell of Embodiment 5 of the disclosure.
FIG. 18 is a schematic structural view (2) of the jelly roll assembly of the prismatic cell of Embodiment 5 of the disclosure.
FIG. 19 is a schematic structural view of a jelly roll assembly of a prismatic cell of Embodiment 6 of the disclosure.
FIG. 20 is a schematic structural view (1) of a jelly roll assembly of a prismatic cell of Embodiment 7 of the disclosure.
FIG. 21 is a schematic three-dimensional view of the jelly roll assembly in FIG. 20.
FIG. 22 is a schematic structural view (2) of the jelly roll assembly of the prismatic cell of Embodiment 7 of the disclosure.
FIG. 23 is a schematic view (1) of a processing state of the prismatic cell of Embodiment 7 of the disclosure.
FIG. 24 is a schematic view (2) of a processing state of the prismatic cell of Embodiment 7 of the disclosure.

### DESCRIPTION OF THE EMBODIMENTS

A preferred embodiment is given below and combined with the accompanying drawings to more clearly and completely describe the disclosure.

### Embodiment 1

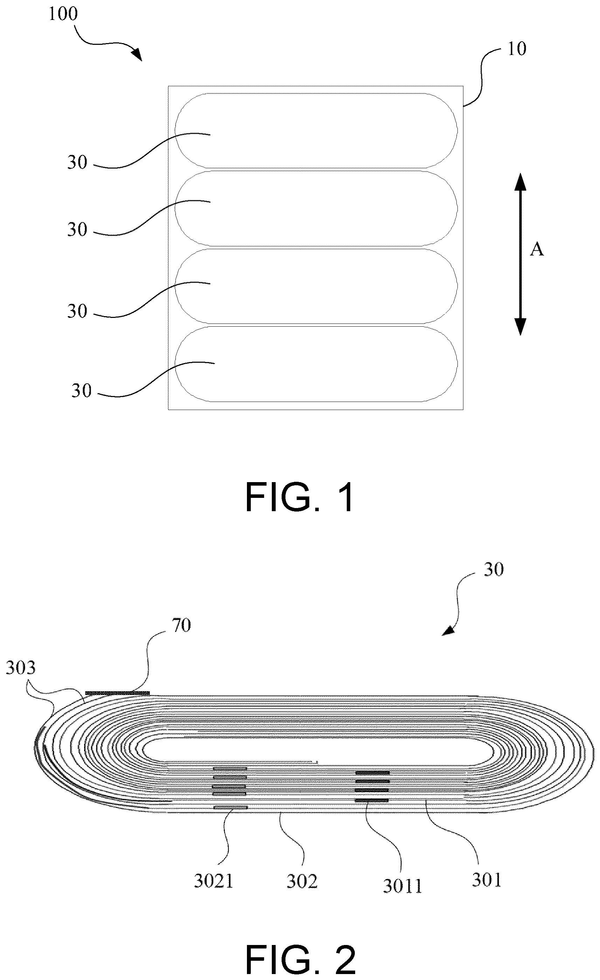

As shown in FIG. 1, a prismatic cell 100 includes a shell 10 and multiple jelly rolls 30 disposed within the shell 10. Each jelly roll 30 is stacked along a first direction A. As shown in FIG. 2, the single jelly roll 30 is actually formed by winding a positive electrode sheet 301, a negative electrode sheet 302, and a separator 303. The positive electrode sheet 301 and the negative electrode sheet 302 are led out at one end of the jelly roll 30 through a positive electrode tab 3011 and a negative electrode tab 3021 respectively. To avoid a short circuit between the positive electrode sheet 301 and the negative electrode sheet 302, two separators 303 with relatively large areas covering both sides of the electrode sheets separate the positive electrode sheet 301 and the negative electrode sheet 302. In addition, an ending tape 80 is also disposed on the jelly roll 30. Through the ending tape 80 adhered to a tail end of the separator 303, the tail end of the separator 303 is fixed to an outer peripheral surface of the jelly roll 30.

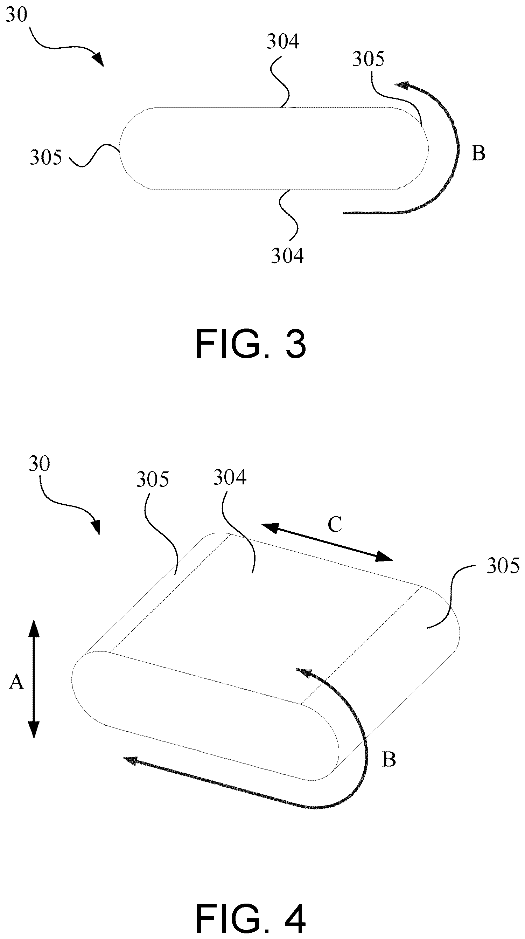

As shown in FIG. 3 and FIG. 4, along a winding direction B of the jelly roll 30, the outer peripheral surface of the jelly roll 30 includes two plane regions 304 and two corner regions 305 respectively connected to opposite ends of the two plane regions 304. The two corner regions 305 are a first corner region 305a and a second corner region 305b respectively.

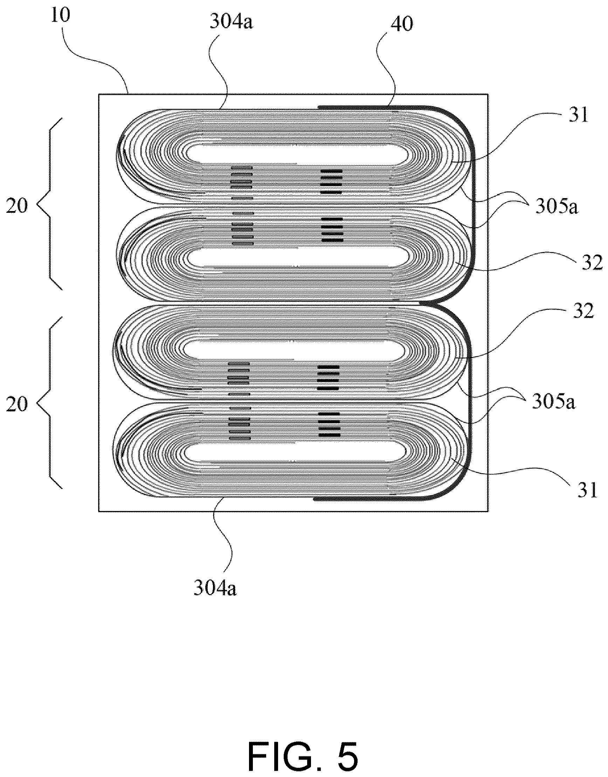

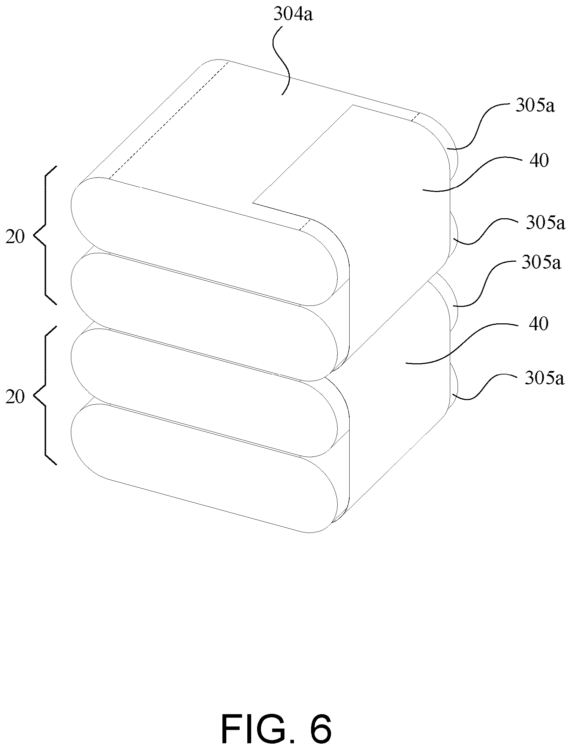

For the prismatic cell 100 provided by the disclosure, in order to facilitate the processing and shell insertion of each jelly roll 30, the jelly rolls 30 disposed within the shell 10 are divided into two jelly roll assemblies 20. Each jelly roll assembly 20 includes at least two stacked jelly rolls 30. As shown in FIG. 5 and FIG. 6, the prismatic cell 100 of this embodiment has four jelly rolls 30, which are therefore divided into two jelly roll assemblies 20. Each jelly roll assembly 20 includes two jelly rolls 30 stacked along the first direction A. Two plane regions 304 of each jelly roll 30 are perpendicular to the first direction A. The jelly roll 30 adjacent to the shell 10 along the first direction A in the jelly roll assembly 20 is designated as a first jelly roll 31. The two plane regions 304 of the first jelly roll 31 include a first plane region 304a adjacent to the shell 10. The jelly roll 30 adjacent to another jelly roll assembly 20 in the jelly roll assembly 20 is designated as a second jelly roll 32.

As shown in FIG. 5 and FIG. 6, taking the jelly roll assembly 20 located on the upper side in the figures as an example, the jelly roll assembly 20 includes a first insulating tape 40. The first insulating tape 40 covers the first corner region 305a of the second jelly roll 32, and one end of the first insulating tape 40 extends via the first corner region 305a of the first jelly roll 31 to the first plane region 304a.

The prismatic cell 100, by forming two jelly rolls 30 into a jelly roll assembly 20 and then accommodating two jelly roll assemblies 20 within the shell 10, facilitates the overall processing and manufacturing of the prismatic cell 100. The jelly roll assembly 20 covers the first corner region 305a of each jelly roll 30 in the jelly roll assembly 20 by disposing the first insulating tape 40, so that the first insulating tape 40 generates a tightening effect on the corner region 305 of each jelly roll 30, making the electrode sheet and separator 303 in the first corner region 305a of the jelly roll 30 fit tightly, which improves lithium precipitation phenomenon.

Additionally, the first insulating tape 40 extends to a surface of the first plane region 304a of the first jelly roll 31 adjacent to the shell 10 along the first direction A, to increase a coverage area of the first insulating tape 40 on the outer peripheral surface of the jelly roll assembly 20, and enable to clamp and fix the portion of the first insulating tape 40 disposed on the first plane region 304a by the first jelly roll 31 and the shell 10, which brings a better fixing effect.

Meanwhile, by extending the first insulating tape 40 to the surface of the first plane region 304a of the first jelly roll 31 adjacent to the shell 10 along the first direction A, the first jelly roll 31 is separated from the shell 10 by the first insulating tape 40, enhancing an insulation protection effect of the jelly roll assembly 20.

In other embodiments, in a case where a single jelly roll assembly 20 includes three or more jelly rolls 30, the first insulating tape 40 should also extend from the first corner region 305a of the second jelly roll 32 adjacent to another jelly roll assembly 20 to the first corner region 305a and the first plane region 304a of the first jelly roll 31 adjacent to the shell 10, to simultaneously contact the first corner regions 305a of all jelly rolls 30 in the jelly roll assembly 20.

Specifically, the prismatic cell 100 in FIG. 5 and FIG. 6 is a specific implementation provided by this embodiment: the first insulating tapes 40 of both jelly roll assemblies 20 cover the right side of the jelly rolls 30 in the jelly roll assemblies 20. Therefore, in the prismatic cell 100 provided in FIG. 4, the first corner regions 305a of the jelly rolls 30 in both jelly roll assemblies 20 are on the right side.

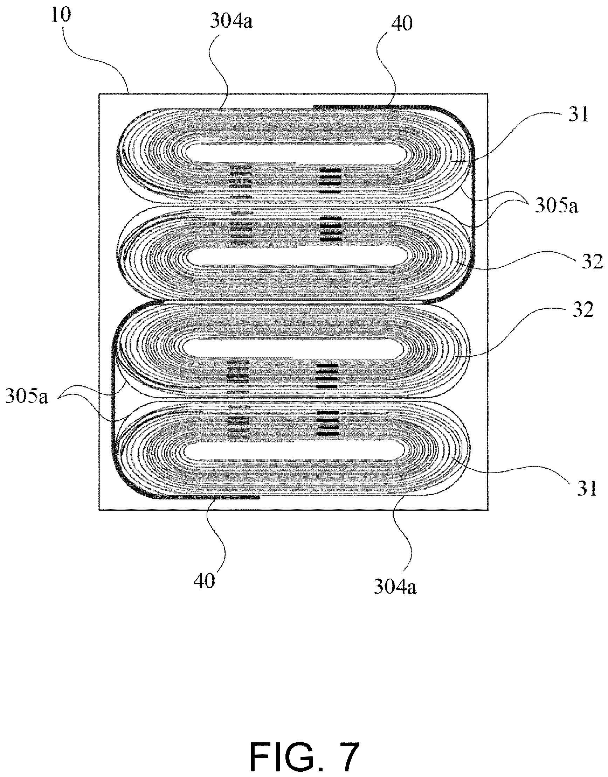

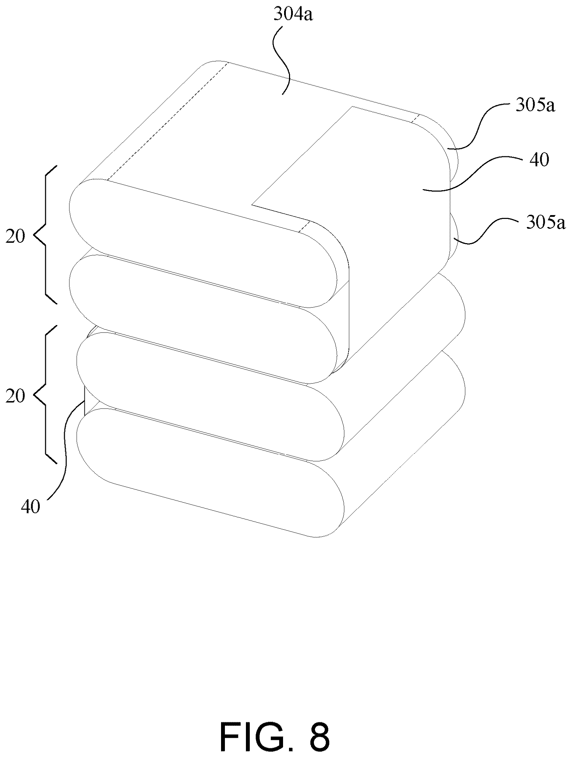

In other specific implementations, as shown in FIG. 7 and FIG. 8, the right side of the jelly rolls 30 in the jelly roll assembly 20 located on the upper side in the figures is covered by the first insulating tape 40, while the left side of the jelly rolls 30 in the jelly roll assembly 20 located on the lower side in the figures is covered by the first insulating tape 40. Therefore, in the prismatic cell 100 provided in FIG. 7, the first corner regions 305a of the jelly rolls 30 in the jelly roll assembly 20 located on the upper side in the figure are all on the right side, while the first corner regions 305a of the jelly rolls 30 in the jelly roll assembly 20 on the lower side are all on the left side. Of course, the aforementioned two specific implementations are only used for illustrative purposes, and the first insulating tape 40 may be disposed on a side surface of the jelly roll assembly 20 according to requirements.

Specifically, in this embodiment, one end of the first insulating tape 40 is disposed at a junction between the first corner region 305a and the plane region 304 of the second jelly roll 32, so that the coverage area of the first insulating tape 40 on the corner region 305 of the jelly roll 30 may be increased by disposing one end of the first insulating tape 40 at the junction between the first corner region 305a and the plane region 304 of the second jelly roll 32.

The end of the first insulating tape 40 disposed at the junction between the first corner region 305a and the plane region 304 of the second jelly roll 32 without extending to a surface of the plane region 304 may avoid the first insulating tape 40 being disposed on the plane region 304 of the jelly roll 30 and increasing the overall thickness of the jelly roll 30, so that the prismatic cell 100 may accommodate more jelly rolls 30 along the first direction A, with relatively higher energy density. Of course, in other embodiments, the end of the first insulating tape 40 disposed on the second jelly roll 32 may also not extend to the junction between the first corner region 305a and the plane region 304 of the second jelly roll 32, or may directly extend to the plane region 304 via the first corner region 305a.

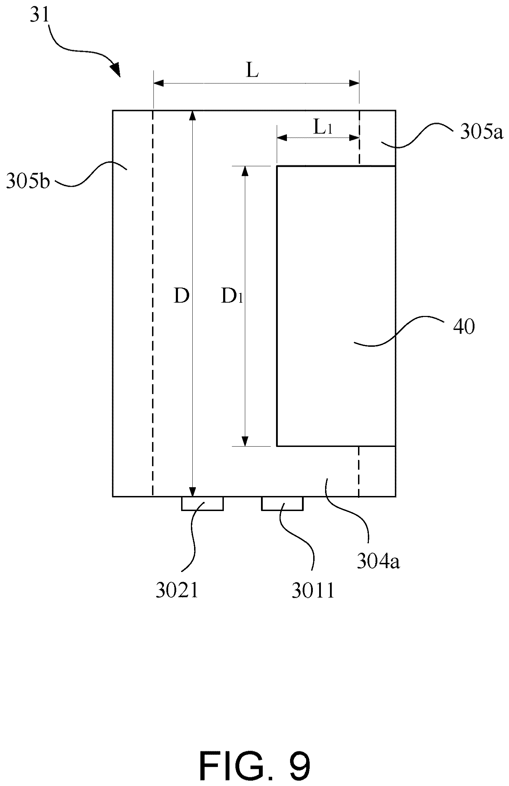

Specifically, as shown in FIG. 9, which is a top view of the first jelly roll 31 in the jelly roll assembly 20 located on the upper side in FIG. 5 and FIG. 7, it may be seen from the figure that the first insulating tape 40 extends to the first plane region 304a at the top of the jelly roll 30 via the first corner region 305a on the right side. To increase an acting area between the first insulating tape 40 and the corner region 305 of the jelly roll 30, the first insulating tape 40 may better tighten the electrode sheets and the separator 303 of the jelly roll 30. A width D₁ of the first insulating tape 40 should be greater than or equal to 60% of a width D of the separator 303, to ensure that the first insulating tape 40 adheres and covers the surface of the jelly roll 30 over a large area. Meanwhile, the width D₁ of the first insulating tape 40 should be less than or equal to 100% of the width D of the separator 303, to avoid the two sides of the first insulating tape 40 exceeding the separator 303 and affecting shell insertion. More preferably, the width D₁ of the first insulating tape 40 should be less than or equal to 90% of the width D of the separator 303.

Meanwhile, to further increase the coverage area of the first insulating tape 40 on the surface of the first plane region 304a, so as to ensure reliable connection between the first insulating tape 40 and the first jelly roll 31, a length L₁ of the first insulating tape 40 on the first plane region 304a should be greater than or equal to 20% of a length L of the separator 303 on the first plane region 304a, to ensure that the first insulating tape 40 adheres and covers the surface of the first plane region 304a of the first jelly roll 31 over a large area. Meanwhile, under the premise of ensuring reliable connection, the length L₁ of the first insulating tape 40 on the first plane region 304a may be less than or equal to 50% of the length L of the separator 303 on the first plane region 304a.

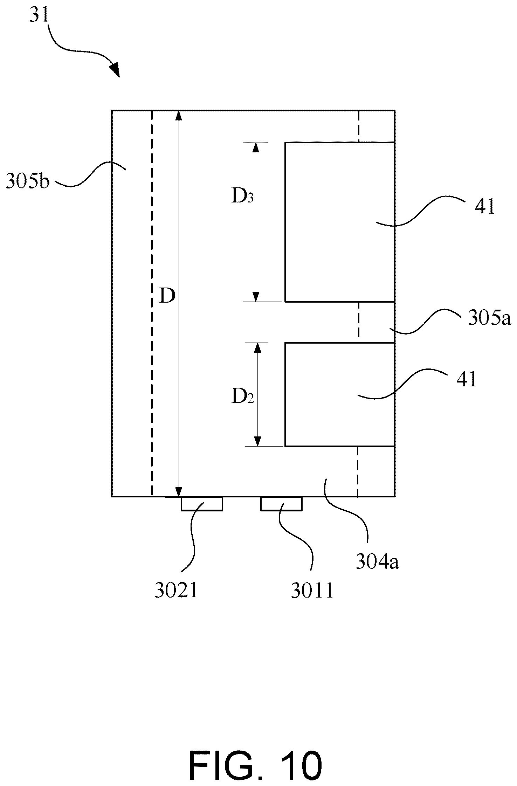

In addition, the first insulating tape 40 may not necessarily be formed by a single wider insulating tape, but may also be formed by multiple narrower insulating tapes together. For example, in another specific implementation of this embodiment, the first insulating tape 40 includes two first sub-insulating tapes 41. The two first sub-insulating tapes 41 cover the first corner region 305a of the second jelly roll 32. As shown in FIG. 10, one end of the two first sub-insulating tapes 41 extends to the first plane region 304a via the first corner region 305a of the first jelly roll 31, and the two first sub-insulating tapes 41 are spaced apart along a separator width direction C of the jelly roll 30.

In a case where the first insulating tape 40 is formed by multiple first sub-insulating tapes 41 together, along the separator width direction C, a sum of the widths of each first sub-insulating tape 41 (D₂+D₃ in this embodiment) should be greater than or equal to 60% of the width D of the separator 303. Of course, in other embodiments, three or more first sub-insulating tapes 41 may also be used to respectively cover the surface of the jelly roll assembly 20 to replace a single wider insulating tape with the narrower insulating tapes, achieving the purpose of tightening the corner region 305 of the jelly roll 30. Moreover, using the narrower insulating tapes may reduce processing difficulty.

In addition, to improve a heat dissipation effect, the first insulating tape 40 may also adopt tape with a heat dissipation capability, so that the first insulating tape 40 covering the surface of the jelly roll assembly 20 may help dissipate heat.

Preferably, a tape thickness of the first insulating tape 40 has a value range of 10µm to 60µm. The adhesive layer thickness has a value range of 5µm to 30µm. The tape thickness may usually be twice the adhesive layer thickness. In addition, the arrangement of the first insulating tape 40 should avoid the ending tape 80 and a thermal conductive tape (not shown in the figure) on the surface of the jelly roll 30 to avoid tape overlap that increases thickness and occupies more space inside the shell along the first direction A.

The prismatic cell 100, by disposing the first insulating tape 40 in the first corner regions 305a of all jelly rolls 30 in the jelly roll assembly 20, may also fix the relative positions of each jelly roll 30 in the jelly roll assembly 20 by using the first insulating tape 40, which facilitates connection between electrode tabs of each jelly roll 30.

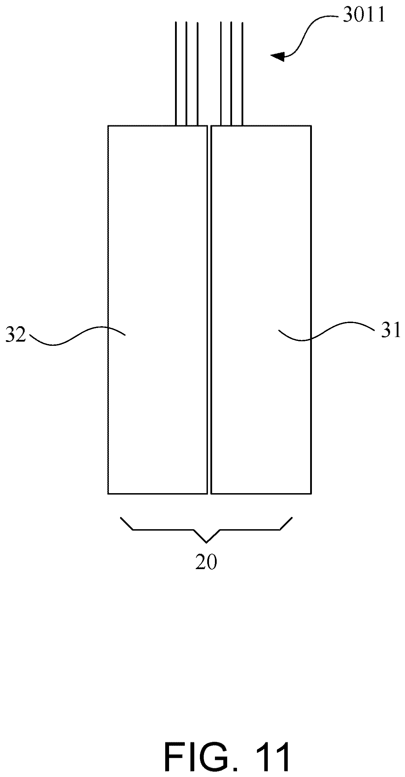

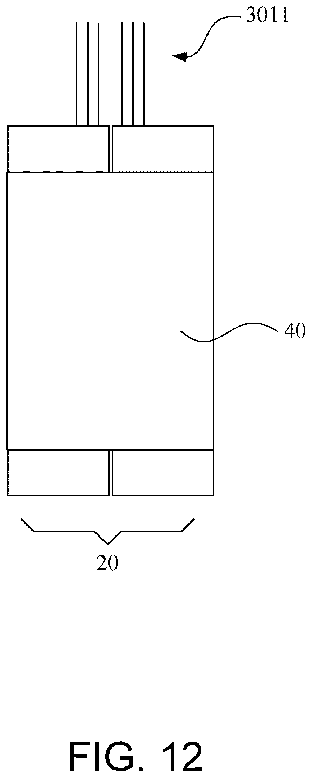

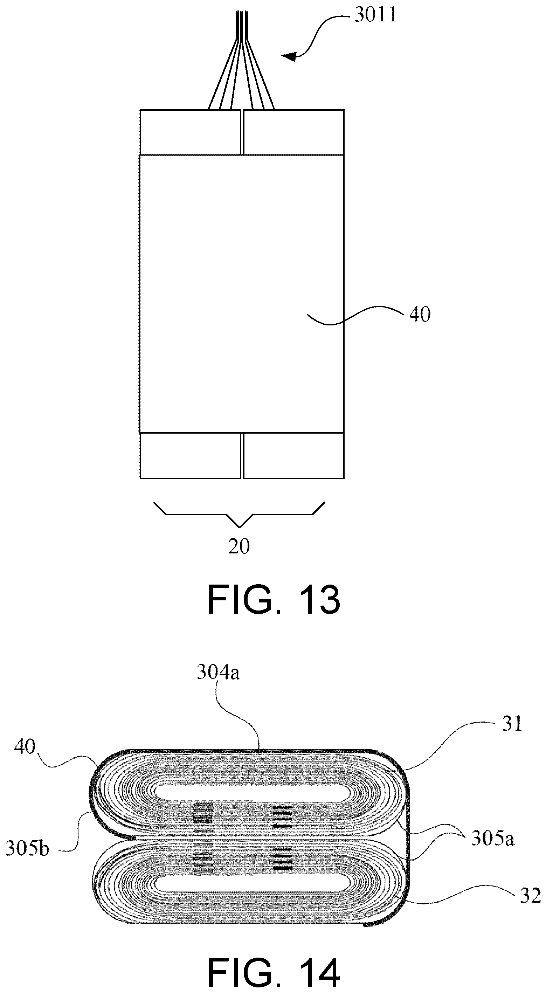

Specifically, when each jelly roll assembly 20 is processed, first as shown in FIG. 11, the jelly rolls 30 in the jelly roll assembly 20 are stacked together along the first direction A for alignment. Next, as shown in FIG. 12, the first insulating tape 40 is adhered to the first corner region 305a of each jelly roll 30 to fix the positions between each jelly roll 30. Finally, as shown in FIG. 13, positive electrode tabs 3011 of each jelly roll 30 are gathered together and welded, while negative electrode tabs 3021 of the jelly roll 30 are gathered together and welded. In a case where two jelly rolls 30 form the jelly roll assembly 20 of this embodiment, the electrode tabs of the jelly roll 30 may be disposed toward positions close to another jelly roll 30 to reduce the difficulty of gathering and welding the electrode tabs together, for convenience of processing.

### Embodiment 2

This embodiment also provides a prismatic cell 100. A structure thereof is substantially the same as the structure of the prismatic cell 100 in Embodiment 1. A difference lies in that as shown in FIG. 14, the end of the first insulating tape 40 in the jelly roll assembly 20 of this embodiment further extends from the first corner region 305a of the first jelly roll 31 via the first plane region 304a to the second corner region 305b of the first jelly roll 31. This arrangement of the structure may increase the coverage area of the first insulating tape 40 on the surface of the first jelly roll 31, and enable the first insulating tape 40 to directly generate the tightening effect on the second corner region 305b of the first jelly roll 31, so as to better tighten the electrode sheets and the separator 303 of each jelly roll 30 in the jelly roll assembly 20. Specifically, in this embodiment, the end of the first insulating tape 40 extends to the junction between the second corner region 305b and the plane region 304 of the first jelly roll 31 to wrap the entire second corner region 305b of the first jelly roll 31 along the winding direction B.

Specifically, in this embodiment, the coverage area of the first insulating tape 40 on the surface of the first plane region 304a of the first jelly roll 31 is larger than the one in Embodiment 1. The first jelly roll 31 is separated from the shell 10 by using the first insulating tape 40, which improves the insulation protection effect of the jelly roll assembly 20.

FIG. 14 only shows the arrangement of the first insulating tape 40 in the jelly roll assembly 20 located on the upper side in the prismatic cell 100 of this embodiment, while the jelly roll assembly 20 located on the lower side is not shown. The first insulating tape 40 in the jelly roll assembly 20 located on the lower side may be disposed according to actual conditions.

### Embodiment 3

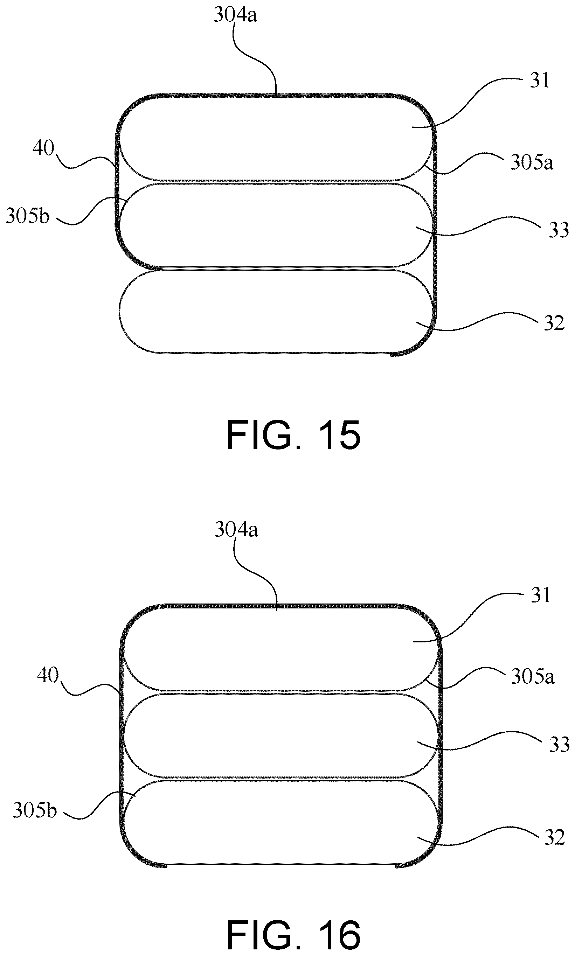

This embodiment also provides a prismatic cell 100. A structure thereof is substantially the same as the structure of the prismatic cell 100 in Embodiment 2. A difference lies in that in the case where a single jelly roll assembly 20 includes three or more jelly rolls 30, the jelly roll 30 disposed between the first jelly roll 31 and the second jelly roll 32 in the jelly roll assembly 20 is designated as a third jelly roll 33. As shown in FIG. 15, in this embodiment, the end of the first insulating tape 40 further extends from the second corner region 305b of the first jelly roll 31 to the second corner region 305b of the third jelly roll 33. This arrangement of the structure may increase the coverage area of the first insulating tape 40 on the surface of each jelly roll 30 in the jelly roll assembly 20. Through another end of the first insulating tape 40 extending and covering more second corner regions 305b of the jelly rolls 30, the first insulating tape 40 may also directly generate the tightening effect on the covered second corner regions 305b to better tighten the electrode sheets and the separator 303 of each jelly roll 30 in the jelly roll assembly 20. In this embodiment, the end of the first insulating tape 40 extends to the junction between the second corner region 305b and the plane region 304 of the third jelly roll 33 to wrap as many areas of the second corner region 305b of the third jelly roll 33 as possible. The first insulating tape 40 of this embodiment covers the surface of the first plane region 304a of the first jelly roll 31 to separate the first jelly roll 31 from the shell 10, which improves the insulation protection effect of the jelly roll assembly 20.

Specifically, in this embodiment, since the jelly roll assembly 20 is formed by three jelly rolls 30, the jelly roll assembly 20 has only one third jelly roll 33 in this case. If in other embodiments, when the jelly roll assembly 20 is formed by four or more jelly rolls 30, the jelly roll assembly 20 should have multiple third jelly rolls 33. In this case, the end of the first insulating tape 40 may extend to the second corner region 305b of one of the third jelly rolls 33, and specifically which third jelly roll 33 to be extended may be disposed according to actual conditions.

Additionally, FIG. 15 only shows the arrangement of the first insulating tape 40 in the jelly roll assembly 20 located on the upper side in the prismatic cell 100 of this embodiment, while the jelly roll assembly 20 located on the lower side is not shown. The first insulating tape 40 in the jelly roll assembly 20 located on the lower side may be disposed according to actual conditions.

### Embodiment 4

This embodiment also provides a prismatic cell 100. A structure thereof is substantially the same as the structure of the prismatic cell 100 in Embodiment 2. A difference lies in that as shown in FIG. 16, the first insulating tape 40 in the jelly roll assembly 20 of this embodiment further extends from the second corner region 305b of the first jelly roll 31 to the second corner region 305b of the second jelly roll 32. This arrangement of the structure may increase the coverage area of the first insulating tape 40 on the surface of the first jelly roll 31, enabling the first insulating tape 40 to cover the second corner region 305b of each jelly roll 30 in the jelly roll assembly 20, so as to directly generate the tightening effect on the second corner region 305b of each jelly roll 30, so that the electrode sheets and the separator 303 in both corner regions 305 of the jelly roll 30 may fit tightly, which improves lithium plating phenomenon.

Specifically, in this embodiment, the first insulating tape 40 covers the surface of the first plane region 304a of the first jelly roll 31, to separate the first jelly roll 31 from the shell 10, which improves the insulation protection effect of the jelly roll assembly 20.

In this embodiment, the end of the first insulating tape 40 extends to the junction between the second corner region 305b and the plane region 304 of the first jelly roll 31 to wrap as many areas of the second corner region 305b of the first jelly roll 31 as possible.

FIG. 16 only shows the arrangement of the first insulating tape 40 in the jelly roll assembly 20 located on the upper side in the prismatic cell 100 of this embodiment, while the jelly roll assembly 20 located on the lower side is not shown. The first insulating tape 40 in the jelly roll assembly 20 located on the lower side may be disposed according to actual conditions.

### Embodiment 5

This embodiment also provides a prismatic cell 100. A structure thereof is substantially the same as the structure of the prismatic cell 100 in Embodiment 1. A difference lies in that the prismatic cell 100 of this embodiment further includes a heat dissipation medium 50. The heat dissipation medium 50 is disposed between two adjacent jelly roll assemblies 20 to improve the heat dissipation capability between the jelly roll assemblies 20.

A preferred range of a thermal conductivity coefficient of the heat dissipation medium 50 is between 0.1 and 1.0. A thermal conductive layer of the heat dissipation medium 50 may be polymer materials (such as polytetrafluoroethylene (PTFE), polyethylene terephthalate (PET), glass polyester (GPO), resorcinol-formaldehyde resin (RF), and other materials), inorganic thermal conductive materials (such as aluminum foil, silicone gel, and other materials), or metal materials (such as metal thin plates). Specifically, in this embodiment, the heat dissipation medium 50 is formed by adhering the insulating tape with the heat dissipation capability to the surface of the jelly roll assembly 20. In a case where the heat dissipation medium 50 is the insulating tape, the thermal conductive layer of the tape is composed of heat dissipation materials existing in the related art, for example, the polymer materials or the inorganic thermal conductive materials.

By disposing the heat dissipation medium 50 with the thermal conductive capability between the jelly roll assemblies 20, the heat conduction capability between the jelly roll assemblies 20 may be improved, which enhances the overall heat dissipation capability of the prismatic cell 100.

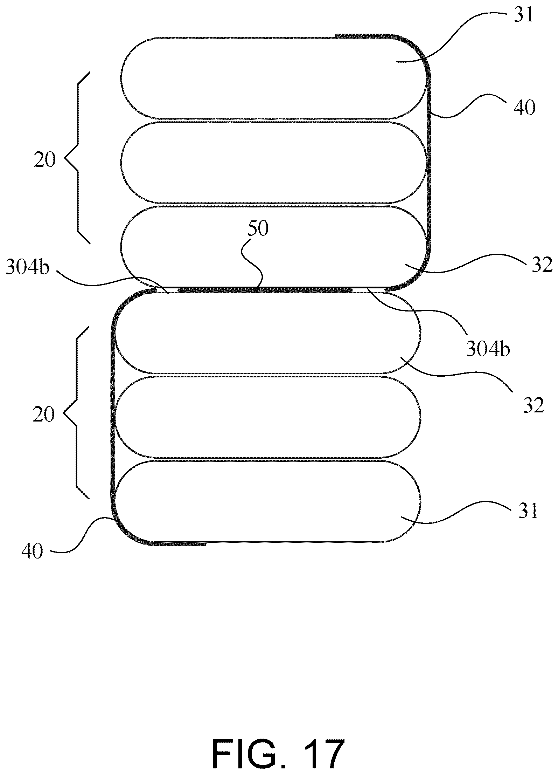

Specifically, as shown in FIG. 17, in this embodiment, the two plane regions 304 of the second jelly roll 32 include a second plane region 304b adjacent to another jelly roll assembly 20. The heat dissipation medium 50 in a form of insulating tape is disposed between the two second plane regions 304b of the two jelly roll assemblies 20.

When the heat dissipation medium 50 is disposed, the ending tape 80 and the thermal conductive tape on the surface of the jelly roll 30 should be avoided, so as to avoid excessively occupying the space of the jelly roll assembly 20 along the first direction A.

Additionally, in a case where the heat dissipation medium 50 is disposed between two second plane regions 304b, the end of the heat dissipation medium 50 may be connected to the end of the first insulating tape 40, to strengthen the connection relationship between the first insulating tape 40 and each jelly roll 30, which improves the tightening capability of each corner region 305 of the jelly roll 30. Specifically, the connection method between the heat dissipation medium 50 and the first insulating tape 40 may be diverse.

For example, connection may be achieved through mutual coverage. A heat conduction path between the heat dissipation medium 50 and the first insulating tape 40 is continuous, making the heat of the heat dissipation medium 50 be transmitted outward via the first insulating tape 40, with a better heat dissipation capability.

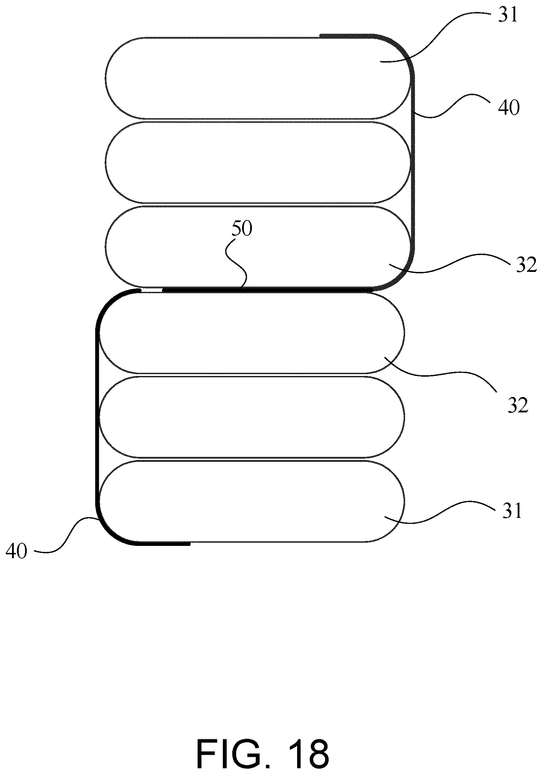

For another example, in a case where the heat dissipation medium 50 adopts the form of the insulating tape, if the form of the insulating tape adopted by the heat dissipation medium 50 is the same as the form of the first insulating tape 40, then the heat dissipation medium 50 and the first insulating tape 40 in one of the jelly roll assemblies 20 may be commonly formed through a single insulating tape. Specifically, as shown in FIG. 18, the heat dissipation medium 50 of this embodiment is commonly formed with the first insulating tape 40 in the jelly roll assembly 20 located on the upper side in the figure through the single insulating tape. Specifically, a lower end of the first insulating tape 40 forming an upper jelly roll assembly 20 is directly adhered to the second plane region 304b of the second jelly roll 32 to form the heat dissipation medium 50, which may improve the heat dissipation capability between the jelly rolls 30, and also further strengthen the connection relationship between the first insulating tape 40 and the jelly roll 30.

### Embodiment 6

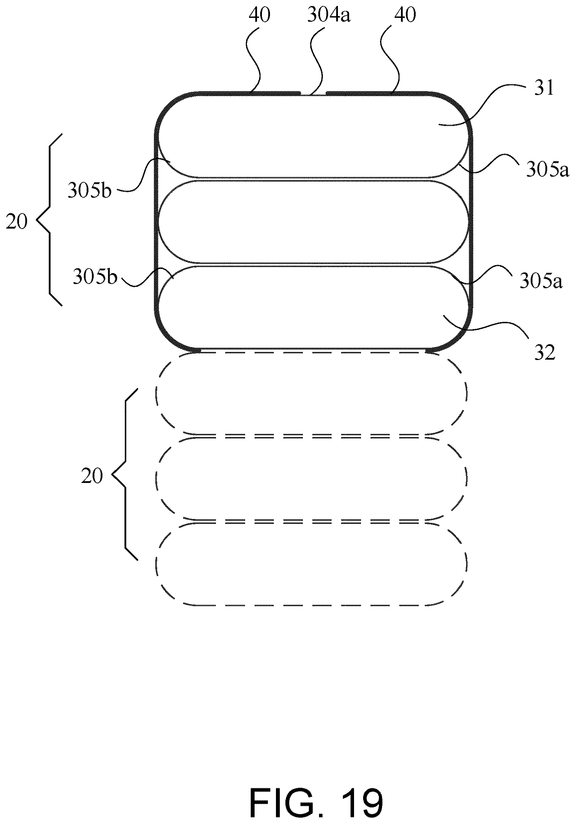

This embodiment also provides a prismatic cell 100. A structure thereof is substantially the same as the structure of the prismatic cell 100 in Embodiment 4. A difference lies in that in this embodiment, in a case where the first insulating tape 40 is disposed on the jelly roll assembly 20 to tighten the first corner region 305a and the second corner region 305b of each jelly roll 30 in the jelly roll assembly 20, specifically, as shown in FIG. 19, a portion of the first insulating tape 40 disposed in the first plane region 304a is intermittent. By making the first insulating tape 40 break at this position, the first insulating tape 40 releases stress under the premise of wrapping the jelly roll surface in a large area, which avoid stress transmission, make the fitting between the electrode sheet and the separator 303 of each jelly roll 30 more tight, and further improve the lithium precipitation phenomenon. Specifically, in this embodiment, the first insulating tape 40 that is intermittent in the first plane region 304a is formed by wrapping a side of the first corner region 305a and a side of the second corner region 305b of the jelly roll 30 respectively through two tapes.

### Embodiment 7

This embodiment also provides a prismatic cell 100. A structure thereof is substantially the same as the structure of the prismatic cell 100 in Embodiment 1. A difference lies in that the prismatic cell 100 further includes a second insulating tape 70 on the basis. Two ends of the second insulating tape 70 respectively cover the two jelly roll assemblies 20 to achieve a position fixed between the two jelly roll assemblies 20, which avoids displacement between the jelly roll assemblies 20 during processing and manufacturing, so as to facilitate accommodation of the jelly rolls 30 within the shell 10, and also facilitate implementation of the subsequent manufacturing process (for example, connecting the electrode tabs in the two jelly roll assemblies 20).

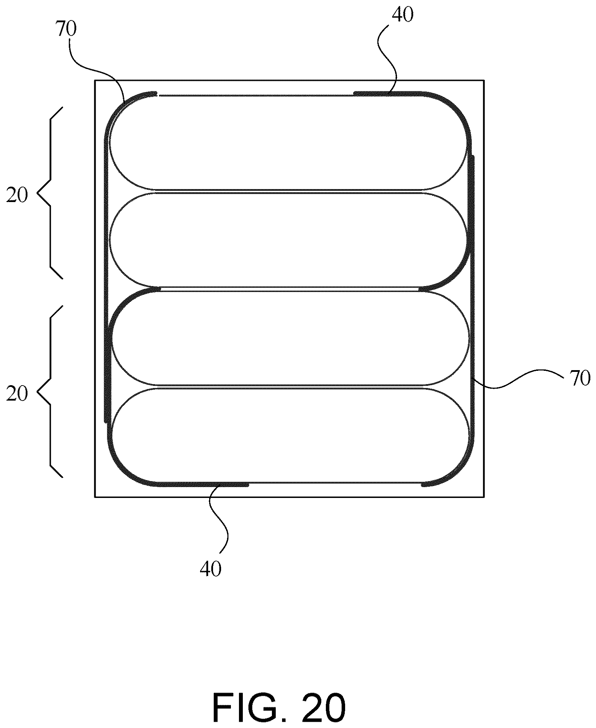

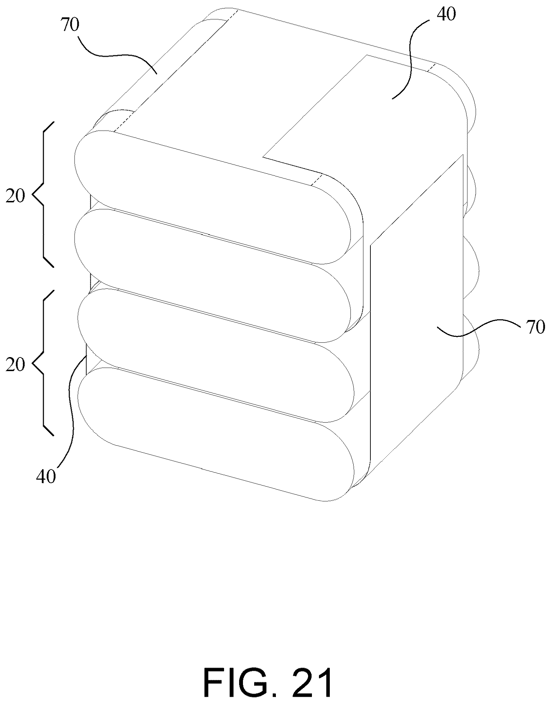

Specifically, as shown in FIG. 20 and FIG. 21, on the basis of the prismatic cell 100 provided in Embodiment 1, second insulating tapes 70 are respectively disposed on both sides of the jelly roll assembly 20. An upper end of the second insulating tape 70 located on the left side in the figure covers the surface of the jelly roll 30 in the upper jelly roll assembly 20 (for example, in this embodiment, extending to the second corner region 305b of the first jelly roll 31), while a lower end of the second insulating tape 70 located on the left side covers the surface of the first insulating tape 40 in the lower jelly roll assembly 20. An upper end of the second insulating tape 70 located on the right side in the figure covers the surface of the first insulating tape 40 in the upper jelly roll assembly 20, while a lower end of the second insulating tape 70 located on the right side covers the surface of the jelly roll 30 in the lower jelly roll assembly 20 (for example, in this embodiment, extending to the second corner region 305b of the first jelly roll 31). As can be seen from FIG. 21, a width of the second insulating tape 70 may be different from the width of the first insulating tape 40. For example, the width thereof may be slightly narrower than the width of the first insulating tape 40.

The second insulating tape 70 extends to the corner region 305 of the first jelly roll 31 in the jelly roll assembly 20 to tighten the corner region 305 on the side of the jelly roll assembly 20 through the second insulating tape 70, so that the electrode sheet and the separator 303 in the corner region 305 on the side fit more tightly. At the same time, the second insulating tape 70 covers the surface of the first insulating tape 40 in the jelly roll assembly 20 to structurally strengthen the first insulating tape 40, which improves the tightening effect of the first insulating tape 40 on the corner region 305 of the covered jelly roll 30. For this implementation where one end of the second insulating tape 70 extends to the surface of the first insulating tape 40 of one jelly roll assembly 20, while another end extends to the corner region 305 of the first jelly roll 31 in another jelly roll assembly 20. Different core implementations of the jelly rolls 30 may be adopted to avoid interference with the already adhered first insulating tape 40.

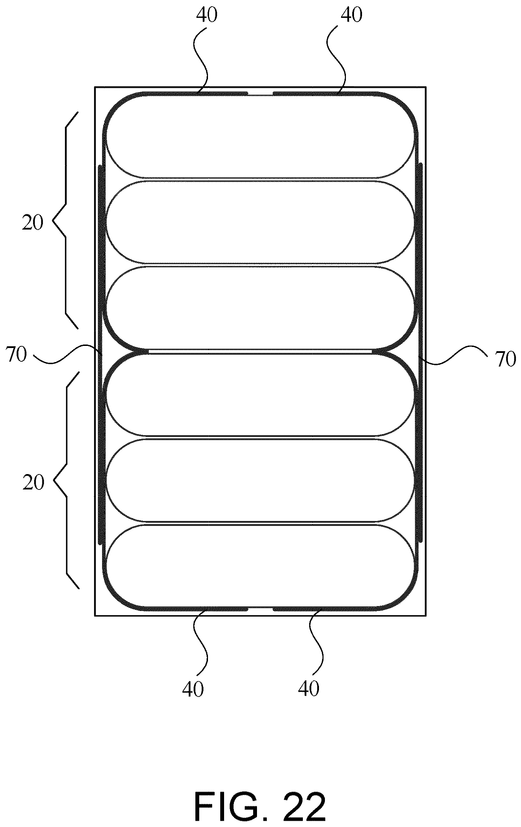

Additionally, as shown in FIG. 22, on the basis of the prismatic cell 100 provided in Embodiment 6, the second insulating tapes 70 are respectively disposed on both sides of the jelly roll assembly 20. The upper end of the second insulating tape 70 located on the left side in the figure covers the surface of the first insulating tape 40 in the upper jelly roll assembly 20, and the lower end of the second insulating tape 70 located on the left side covers the surface of the first insulating tape 40 in the lower jelly roll assembly 20. The upper end of the second insulating tape 70 located on the right side in the figure covers the surface of the first insulating tape 40 in the upper jelly roll assembly 20, and the lower end of the second insulating tape 70 located on the right side covers the surface of the first insulating tape 40 in the lower jelly roll assembly 20.

Specifically, in other embodiments, the second insulating tape 70 may be selected to respectively cover both sides of the two jelly roll assemblies 20, or only cover one side of the two jelly roll assemblies 20. The specific disposing implementation may be set according to actual conditions. The coverage position, the tape thickness, and the adhesive layer thickness of the second insulating tape 70 may refer to the specific disposing implementation of the first insulating tape 40 in the aforementioned embodiments.

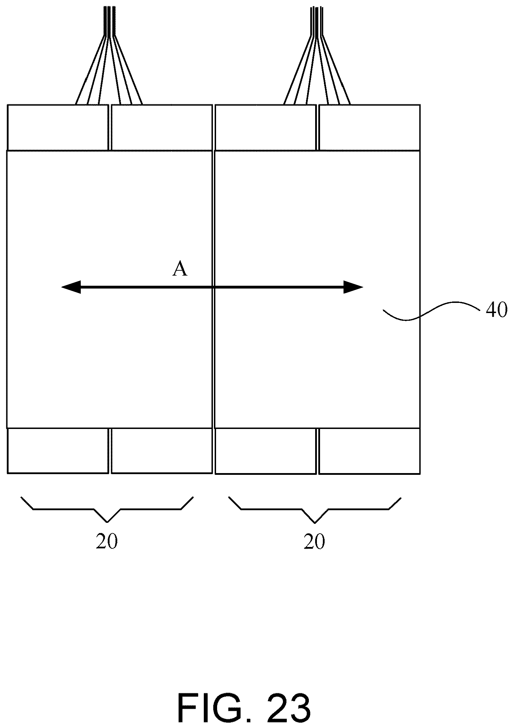

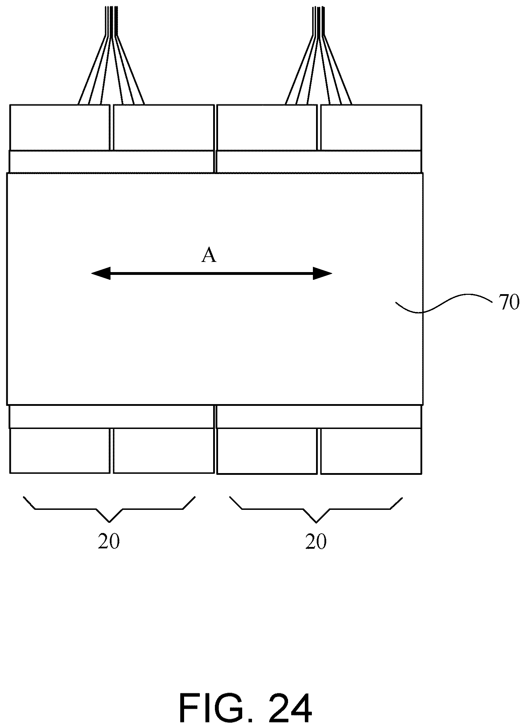

By disposing the second insulating tape 70 to respectively cover the two jelly roll assemblies 20, the position fixed between the two jelly roll assemblies 20 is achieved to facilitate the implementation of the subsequent processing. Specifically, first as shown in FIG. 23, the two jelly roll assemblies 20 are stacked together along the first direction A. Next, as shown in FIG. 24, the second insulating tape 70 covering between the two jelly roll assemblies 20 may cover the surface of the jelly roll 30 in the jelly roll assembly 20, or cover the surface of the first insulating tape 40 in the jelly roll assembly 20. The specific coverage implementation may be set according to actual conditions. Finally, the two jelly roll assemblies 20 fixed together by the second insulating tape 70 are loaded into the shell 10, and the subsequent processing is performed on the prismatic cell 100.

## Claims

1. A prismatic cell (100), comprising a shell (10) and two jelly roll assemblies (20) accommodated in the shell (10), each of the two jelly roll assemblies (20) comprising at least two jelly rolls (30) stacked along a first direction (A), wherein an outer peripheral surface of each of the at least two jelly rolls (30) along a winding direction (B) comprises two plane regions (304) and a first corner region (305a) and a second corner region (305b) respectively connected to opposite ends of the two plane regions (304), the two plane regions (304) are both perpendicular to the first direction (A),
one of the jelly rolls (30) in each of the two jelly roll assemblies (20) which is adjacent to the shell (10) along the first direction (A) is designated as a first jelly roll (31), the two plane regions (304) of the first jelly roll (31) comprise a first plane region (304a) adjacent to the shell (10), and another of the jelly rolls (30) in each of the two jelly roll assemblies (20) which is adjacent to another of the two jelly roll assemblies (20) is a second jelly roll (32);
each of the two jelly roll assemblies (20) further comprises a first insulating tape (40), the first insulating tape (40) covers at least a portion of the first corner region (305a) of the second jelly roll (32), and one end of the first insulating tape (40) extends to the first plane region (304a) via the first corner region (305a) of the first jelly roll (31).

2. The prismatic cell (100) according to claim 1, wherein one end of the first insulating tape (40) extends to the second corner region (305b) of the first jelly roll (31) via the first corner region (305a) of the first jelly roll (31).

3. The prismatic cell (100) according to claim 2, wherein each of the two jelly roll assemblies (20) comprises at least three jelly rolls (30) stacked along the first direction (A), one of the jelly rolls (30) in the each of the two jelly roll assemblies (20) disposed between the first jelly roll (31) and the second jelly roll (32) is designated as a third jelly roll (33), and one end of the first insulating tape (40) further extends to the second corner region (305b) of one of the third jelly rolls (33) via the second corner region (305b) of the first jelly roll (31).

4. The prismatic cell (100) according to claim 2, wherein one end of the first insulating tape (40) further extends to the second corner region (305b) of the second jelly roll (32) via the second corner region (305b) of the first jelly roll (31).

5. The prismatic cell (100) according to claim 1, wherein another end of the first insulating tape (40) is disposed at a junction between the first corner region (305a) of the second jelly roll (32) and the plane region (304) of the second jelly roll (32).

6. The prismatic cell (100) according to claim 1, wherein the prismatic cell (100) further comprises a heat dissipation medium (50), and the heat dissipation medium (50) is disposed between the two jelly roll assemblies (20).

7. The prismatic cell (100) according to claim 6, wherein the two plane regions (304) of the second jelly roll (32) comprise second plane regions (304b) adjacent to another of the two jelly roll assemblies (20), the heat dissipation medium (50) is disposed between the second plane regions (304b) in the two jelly roll assemblies (20), and the heat dissipation medium (50) is connected to an end of the first insulating tape (40).

8. The prismatic cell (100) according to claim 6, wherein the jelly roll (30) is formed by winding a positive electrode sheet (301), a negative electrode sheet (302), and a separator (303), the separator (303) is sandwiched between the positive electrode sheet (301) and the negative electrode sheet (302), and a tail end of the separator (303) extends beyond tail ends of the positive electrode sheet (301) and the negative electrode sheet (302); and
the prismatic cell (100) further comprises an ending tape (80), the ending tape (80) is adhered to the tail end of the separator (303) and fixes the tail end of the separator (303) to the outer peripheral surface of the jelly roll (30), and the ending tape (80) and the heat dissipation medium (50) are offset on the outer peripheral surface of the jelly roll (30).

9. The prismatic cell (100) according to any one of claims 1-8, wherein the prismatic cell (100) further comprises a second insulating tape (70), and the second insulating tape (70) covers at least a portion of the first corner region (305a) of the second jelly roll (32) in each of the two jelly roll assemblies (20);
or, the second insulating tape (70) covers at least a portion of the second corner region (305b) of the second jelly roll (32) in each of the two jelly roll assemblies (20).

10. The prismatic cell (100) according to any one of claims 1-8, wherein the prismatic cell (100) further comprises a second insulating tape (70), and at least one end of the second insulating tape (70) extends to the second corner region (305b) of the first jelly roll (31) in at least one of the two jelly roll assemblies (20);
and/or, at least one end of the second insulating tape (70) extends to a surface of the first insulating tape (40) in at least one of the two jelly roll assemblies (20).

11. The prismatic cell (100) according to any one of claims 1-8, wherein the jelly roll (30) is formed by winding a positive electrode sheet (301), a negative electrode sheet (302), and a separator (303), the separator (303) is sandwiched between the positive electrode sheet (301) and the negative electrode sheet (302), and along a width direction (C) of the separator (303), a width of the first insulating tape (40) has a value range of 60% to 90% of a width of the separator (303).

12. The prismatic cell (100) according to claim 11, wherein the first insulating tape (40) comprises at least two first sub-insulating tapes (41), each of the first sub-insulating tapes (41) covers at least a portion of the first corner region (305a) of the second jelly roll (32), and one end of each of the first sub-insulating tapes (41) extends to the first plane region (304a) via the first corner region (305a) of the first jelly roll (31), and each of the first sub-insulating tapes (41) is arranged at intervals along the width direction (C) of the separator (303) of the jelly roll (30).
